# EUROPEAN PATENT APPLICATION

(11) **EP 4 462 845 A1**
(43) Date of publication of application: **13.11.2024**
(21) Application number: 22917741.5
(22) Date of filing: 05.01.2022
(51) Int. Cl.: H04W 24/02, H04W 56/00

(54) **UPLINK SYNCHRONIZATION METHOD, DEVICE, AND READABLE STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Dehns Germany Partnerschaft mbB
(86) International application number: PCT/CN2022/070328
(87) International publication number: WO 2023/130264

(57) **Abstract**

The present invention provides an uplink synchronization method, a device, and a readable storage medium. The method comprises: in response to the timeout of an uplink synchronization valid timer related to timing advance (TA) pre-compensation reference information, determining that the TA pre-compensation reference information fails, and executing processing corresponding to the failure of the TA pre-compensation reference information, wherein the TA pre-compensation reference information comprises at least one of ephemeris information and a common timing advance (common TA). In embodiments of the present invention, a user equipment can uses a corresponding processing mode when the TA pre-compensation reference information fails, so that the user equipment in a connected state can use an appropriate mode to perform TA pre-compensation so as to ensure uplink synchronization.

## Description

### TECHNICAL FIELD

The invention relates to the field of communication technology, in particular to an uplink synchronization method, an uplink synchronization apparatus and a readable storage medium.

### BACKGROUND

In the fifth generation (5G) communication technology, non-land/terrestrial network (NTN) communication is introduced. In NTN communication, user equipment (UE) obtains radio resources through satellites or drones.

The 5G network needs to ensure synchronization of uplink and downlink. For a network device, the uplink timing (timing) of receiving an uplink signal of the UE is delayed compared with the downlink timing of sending a downlink signal. In addition, different UEs have different delays, so that the uplink timing of different UEs is not aligned on the network device side, which will cause interference in data transmissions of UEs.

In order to eliminate different delays of UEs, the network device sends a timing advance (TA) adjustment command to advance the uplink timing of the UE by a certain time, so as to ensure that the uplink timing of all UEs arriving at the base station is aligned. In a random access process, the UE sends a preamble sequence through a random access channel (RACH), and the network device indicates a TA value through a random access message returned to the UE according to the preamble sequence, so as to adjust the UE's uplink timing.

For a land/terrestrial network (TN), the base station can determine the TA value according to the preamble sequence. For the NTN, a difference between delays of different UEs is larger, and the network device cannot directly determine TA adjustment information of the UE's uplink timing according to the preamble sequence, so that a TA pre-compensation method is required. Currently, information related to TA pre-compensation has a corresponding valid time, and the UE cannot perform TA pre-compensation upon the invalidation of the information.

### SUMMARY

Accordingly, the invention provides an uplink synchronization method, an uplink synchronization apparatus and a readable storage medium.

According to a first aspect of embodiments of the invention, an uplink synchronization method is provided. The method is performed by a user equipment (UE), and includes:
determining invalidation of timing advance (TA) pre-compensation reference information and performing processing corresponding to the invalidation of the TA pre-compensation reference information, in response to expiry of an uplink synchronization validity timer related to the TA pre-compensation reference information;
in which the TA pre-compensation reference information comprises at least one of ephemeris information or a common TA.

With the method, the UE can adopt a corresponding processing method when the TA pre-compensation reference information becomes invalid, so that the UE in a connected state can adopt an appropriate method to perform TA pre-compensation to ensure uplink synchronization.

In a possible implementation, the method further includes:
in case that the UE is an Internet of Things (IOT) device and is in a connected state, maintaining the connected state in response to the uplink synchronization validity timer not being in a running state and determining that there is a valid system message carrying the TA pre-compensation reference information.

In a possible implementation, the method further includes:
determining that there is a valid master information block (MIB) and a valid system information block 1 (SIB1).

In a possible implementation, the method further includes:
in case that the UE is an IOT device and is in a connected state, ensuring that there is a valid system message carrying the TA pre-compensation reference information in response to a timer T311 being in a running state.

In a possible implementation, the method further includes:
in case that the UE is an IOT device and is in a connected state, ensuring that there is a valid system message carrying the TA pre-compensation reference information in response to a timer T311 being in a running state and the uplink synchronization validity timer not being in a running state.

In a possible implementation, performing the processing corresponding to the invalidation of the TA pre-compensation reference information includes:
determining that a current cell is prohibited from being accessed in case that the UE is unable to obtain a system message carrying the TA pre-compensation reference information, in response to declaring a radio link failure (RFL).

In a possible implementation, performing the processing corresponding to the invalidation of the TA pre-compensation reference information includes:
entering an idle state and recording an RLF in case that the UE is unable to obtain a system message carrying the TA pre-compensation reference information, in response to not declaring the RFL.

In a possible implementation, recording the RLF includes at least one of:
recording a public land mobile network (PLMN) measurement result;
setting a connection failure type as the RLF; or
setting an RLF cause as failure to obtain the system message or the invalidation of the TA pre-compensation reference information or the expiry of the uplink synchronization validity timer.

In a possible implementation, performing the processing corresponding to the invalidation of the TA pre-compensation reference information includes:
receiving a system message and not receiving downlink data other than the system message.

In a possible implementation, performing the processing corresponding to the invalidation of the TA pre-compensation reference information includes:
in case that the UE is an IOT device and is in a connected state, receiving a system message and monitoring scheduling information corresponding to a system information-radio network temporary identity (SI-RNTI) or a paging-radio network temporary identity (P-RNTI) without monitoring scheduling information other than the scheduling information corresponding to the SI-RNTI or the P-RNTI on a physical downlink control channel (PDCCH).

In a possible implementation, the method further includes:
sending a failure cause to a network device after obtaining valid TA pre-compensation reference information, in which the failure cause includes at least one of: information indicating occurrence of the invalidation of the TA pre-compensation reference information, or information indicating occurrence of the expiry of the uplink synchronization validity timer.

In a possible implementation, sending the failure cause to the network device includes:
sending a media access control control element (MAC CE) or a dedicated radio resource control (RRC) message to the network device, in which the MAC CE or the dedicated RRC message includes the failure cause.

In a possible implementation, sending the failure cause to the network device includes:
sending auxiliary information to the network device, in which the auxiliary information includes the failure cause.

In a possible implementation, the method further includes:
sending information indicating a time when a failure occurs to the network device.

In a possible implementation, performing the processing corresponding to the invalidation of the TA pre-compensation reference information includes:
receiving first configuration information from a network device, in which the first configuration information is configured to indicate whether to declare an RLF; and
determining whether to declare the RLF based on the first configuration information.

In a possible implementation, performing the processing corresponding to the invalidation of the TA pre-compensation reference information includes:
receiving second configuration information from a network device, in which the second configuration information is configured to indicate whether to maintain a connected state; and
determining whether to maintain the connected state based on the first configuration information.

In a possible implementation, performing the processing corresponding to the invalidation of the TA pre-compensation reference information includes:
entering an idle state from a connected state, and setting a connection release cause as the invalidation of the TA pre-compensation reference information or the expiry of the uplink synchronization validity timer.

In a possible implementation, the method further includes:
determining whether to enter an idle state from a connected state.

In a possible implementation, determining whether to enter the idle state from the connected state includes:
entering the idle state from the connected state in response to a network device configuring third configuration information, in which the third configuration information is configured to instruct the UE to enter the idle state upon the expiry of the uplink synchronization validity timer.

In a possible implementation, determining whether to enter the idle state from the connected state includes:
declaring an RLF or determining expiry of a time alignment timer (TAT) in response to a network device not configuring third configuration information, in which the third configuration information is configured to instruct the UE to enter the idle state upon the expiry of the uplink synchronization validity timer.

In a possible implementation, performing the processing corresponding to the invalidation of the TA pre-compensation reference information includes:
recording a connection failure cause, and entering an idle state.

According to a second aspect of embodiments of the invention, a communication apparatus is provided. The communication apparatus may be configured to perform steps executed by the UE in the first aspect or any possible design of the first aspect. The UE may realize respective functions in the above method by a hardware structure, a software module, or a combination of the hardware structure and the software module.

When the communication apparatus in the second aspect is realized by the software module, the communication apparatus may include a processing module. The processing module is used for the communication apparatus to perform processing operations, for example, generating information/messages to be sent, or processing received signals to obtain the information/messages.

When the steps in the above first aspect are performed, the processing module is configured to determine invalidation of TA pre-compensation reference information and perform processing corresponding to the invalidation of the TA pre-compensation reference information, in response to expiry of an uplink synchronization validity timer related to the TA pre-compensation reference information. The TA pre-compensation reference information includes at least one of ephemeris information or a common TA.

According to a third aspect, a communication apparatus including a processor and a memory is provided. The memory is configured to store computer programs. The processor is configured to execute the computer programs to realize the first aspect or any possible design of the first aspect.

According to a fourth aspect, a computer readable storage medium is provided. The computer readable storage medium having instructions (called computer programs or programs) stored thereon. A computer is caused to perform the first aspect or any possible design of the first aspect when the instructions are called and executed on the computer.

It is to be understood that, both the foregoing general description and the following detailed description are exemplary and explanatory merely, and are not restrictive of the invention.

### BRIEF DESCRIPTION OF THE DRAWINGS

The accompanying drawings herein are used to provide a further understanding for embodiments of the invention, and constitute a part of the specification. Exemplary embodiments of embodiments of the invention and descriptions thereof are used to explain the embodiments of the invention, and do not constitute a limitation for the invention, in which:
the accompanying drawings herein, which are incorporated in and constitute a part of this specification, illustrate embodiments consistent with embodiments of the invention, and serve to explain the principle of embodiments of the invention together with the specification;
FIG. 1 is a structural diagram of a non-terrestrial network (NTN) system provided by an embodiment of the invention;
FIG. 2 is a schematic diagram illustrating related information of satellites in a non-terrestrial network provided by an embodiment of the present invention;
FIG. 3 is a schematic diagram of a transparent transmission mode in a non-terrestrial network provided by an embodiment of the present invention;
Fig. 4 is a schematic diagram of a regenerative mode in a non-terrestrial network provided by an embodiment of the present invention;
FIG. 5 is a flowchart of an uplink synchronization method according to an embodiment of the invention;
FIG. 6 is a flowchart of another uplink synchronization method according to an embodiment of the invention;
FIG. 7 is a block diagram of an uplink synchronization apparatus according to an embodiment of the invention;
FIG. 8 is a block diagram of another uplink synchronization apparatus according to an embodiment of the disclosure;
FIG. 9 is a block diagram of a further uplink synchronization apparatus according to an embodiment of the invention; and
FIG. 10 is a block diagram of a further uplink synchronization apparatus according to an embodiment of the invention.

### DETAILED DESCRIPTION

Further description is made to embodiments of the invention with reference to accompanying drawings and detailed embodiments.

Exemplary embodiments will be described in detail herein, examples of which are illustrated in the accompanying drawings. When the following description refers to the accompanying drawings, the same or similar elements may be denoted by the same numerals in different accompanying drawings, unless otherwise indicated. The implementations described in the following exemplary embodiments do not represent all implementations consistent with embodiments of the invention. Instead, they are merely examples of apparatuses and methods consistent with some aspects of the invention as detailed in the appended claims.

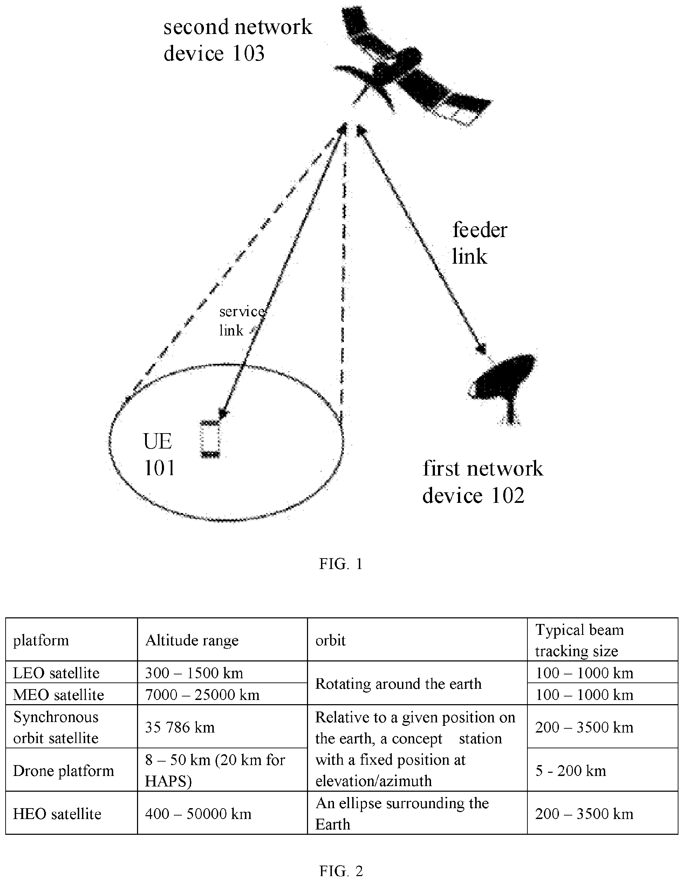

An uplink synchronization method is provided in the embodiments of the invention, which is applied in an NTN system 100. FIG. 1 is a structural diagram of a possible NTN system to which the embodiments of the invention are applicable. The system 100 may be composed of a user equipment 101, a first network device 102 and a second network device 103. A communication link between the first network device 102 and the second network device 103 is a feeder link; and a communication link between the second network device 103 and the user equipment 101 is a service link.

The UE 101 is a wireless terminal device capable of receiving network device scheduling and instruction information, for example, a device used to provide users with voice and/or data connectivity, or a handheld device with a wireless connection function, or other processing devices connected to a wireless modem. The UE 101 can communicate with one or more core networks or the Internet via a radio access network (RAN), and the wireless terminal device can be a mobile terminal device, such as a mobile phone (or called a "cellular" phone, mobile phone), a computer and user equipment 101 communication chip, for example, the wireless terminal device can be a portable, pocket, handheld, computer built-in or vehicle-mounted mobile device, which can exchange language and/or data with the wireless access network. Specifically, the terminal may be a personal communication service (PCS) phone, a cordless phone, a session initiation protocol (SIP) phone, a wireless local loop (WLL) station, a personal digital assistant (PDA), a Tablet PC (Pad), a computer with the wireless transceiver function and other devices. The terminal may also include a subscriber unit, a subscriber station, a mobile station, a mobile station (MS), a remote station, an access point (AP), a remote terminal, an access terminal, a user terminal, a user agent, a subscriber station (SS), a customer premises equipment (CPE), a terminal, a mobile terminal (MT), etc. The wireless terminal device can also be a wearable device and a terminal device in a next-generation communication system, for example, the 5G network or a terminal device in a future evolved public land mobile network (PLMN) network, or a terminal device in a new radio (NR) communication system, etc.

The first network device 102 may be a gateway station or called a ground station, an earth station, or a gateway, and may be used to connect the second network device 103 and the core network.

The second network device 103 may be a satellite (or called a satellite base station), a geostationary earth orbit (GEO) satellite, a medium earth orbit (MEO) satellite and a low orbit (LEO) satellite in a non-geostationary earth orbit (NGEO), a high altitude platform station (HAPS), etc., which is not limited here. As shown in FIG. 2, the altitude, orbit and coverage of the satellite 103 in a typical NTN are shown.

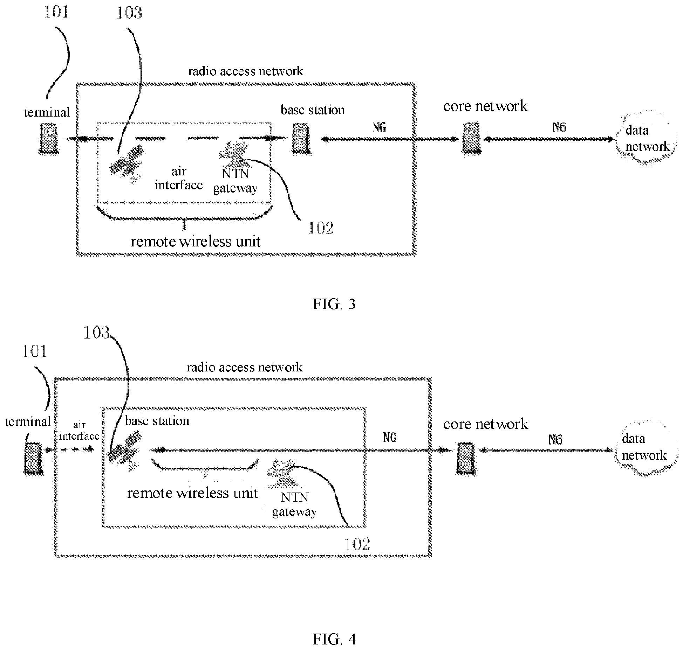

A signal processing mode of the second network device 103, such as a satellite, includes a transparent transmission mode and a regenerative mode. FIG. 3 is a schematic diagram of a transparent transmission mode, and FIG. 4 is a schematic diagram of a regenerative mode.

In the transparent transmission mode shown in FIG. 3, the NTN ground station 102 sends a signal of a gNB to the satellite 103, and the satellite 103 first converts the received signal to a satellite frequency band, and then sends the signal of the satellite frequency band to the UE. In the transparent transmission mode, the satellite 103 is similar to a repeater, except for frequency conversion and signal amplification, the satellite does not demodulate the signal of the gNB.

In the regenerative mode shown in FIG. 4, the NTN ground station 102 sends the signal of the gNB to the satellite 103, and the satellite 103 first demodulates and decodes the signal and then re-encodes and modulates (that is, a regenerative process), and then the satellite 103 transmits the regenerated signal to the UE 101 through the satellite frequency band.

In 5G communication, downlink synchronization is achieved by the UE 101 receiving a downlink synchronization signal sent from the network device 103. After obtaining the downlink synchronization, the UE needs to perform uplink synchronization to ensure that the time when uplink signals of all UEs arrive at the network device is aligned with an uplink timing of the network device.

The uplink synchronization is achieved by the UE initiating a random access. The UE 101 sends a preamble code to the network device, and the network device obtains a transmission delay between the UE and the network device by receiving the preamble code, and then the network device sends a timing advance (TA) command to the UE. The TA value is equal to twice the transmission delay, and the UE advances the uplink transmission according to the value indicated by the TA command to obtain the uplink synchronization.

Since the downlink signal sent by the network device will be subj ect to a one-way propagation delay when reaching the UE 101, the downlink timing for the UE to receive the downlink signal is delayed by the one-way propagation delay compared with the time for the base station to send the downlink signal. When the UE aligns its uplink timing with the downlink timing and then performs the uplink transmission, the uplink signal needs to be subject to the one-way propagation delay before reaching the network device. Therefore, for the network device, the uplink timing of receiving the uplink signal of the UE is delayed by a round-trip time (RTT) compared with the downlink timing of sending the downlink signal.

The RTTs corresponding to different UEs are different, so that the uplink timing of different UEs is not aligned on the network device side, resulting in interference in data transmissions of UEs. The network device can send the TA adjustment command to advance the uplink timing of the UE by a corresponding RTT, so as to ensure that the uplink timing of all UEs arriving at the base station side is aligned.

In the random access process, when the UE 101 sends a preamble sequence at a RACH occasion (denoted as RO), the network device needs to know the sending RO corresponding to the received preamble sequence when receiving the preamble sequence, so as to correctly address the random access request when making a random access response, and perform uplink timing adjustment.

The maximum RTT allowed by the design of the preamble sequence in the TN is 0.68ms (corresponding to 100km coverage radius), which is less than one subframe. Therefore, the subframe in which the network device receives the preamble sequence is the same as the RO subframe corresponding to the sending of the preamble sequence, and the uplink timing deviation can be obtained through the subframe boundary deviation. After determining the uplink timing deviation, the TA value can be determined.

In the NTN, the RTT difference between the RTTs for different UEs 101 reaching the first network device 102 can reach up to 10.3ms, that is, a difference between delays of different UEs is larger, and the first network device 102 cannot infer the RO subframe for sending and the uplink timing deviation from the received preamble sequence. In case that the interval between ROs is greater than the maximum RTT difference, it may ensure that preamble sequence receiving windows of different ROs do not overlap, but this case will bring a great restriction on RO resources.

The ambiguity problem occurring in preamble sequence reception involved in the NTN can be adjusted through TA pre-compensation, that is, before the UE 101 sends the preamble sequence, the uplink timing (UL timing) of the UE 101 is advanced according to the RTT between the UE 101 and the first network device 102, to ensure that the difference of time when the preamble sequences sent by different UEs using the same RO arrive at the base station is limited within one subframe.

In the NTN, the RTT from the UE 101 to the first network device 102 includes two parts.

One part is the RTT of the service link between the UE 101 and the satellite 103, which refers to a UE specific TA.

The other part is the RTT of the feeder link between the satellite 103 and the first network device 102, which refers to a common TA. A part of the common TA may be compensated by the first network device 102, and another part of the common TA may be compensated by the UE 101. The part compensated by the UE 101 is sent to the UE 101 by the first network device 102 through a system message.

In addition to broadcasting the common TA that the UE101 needs to compensate, the first network device 102 also broadcasts ephemeris information of the satellite to assist the UE 101 to obtain a position of the satellite 103 so as to calculate the RTT from the UE 101 to the satellite 103. Due to the mobility of the satellite, the common TA and the ephemeris information will change, so the ephemeris information and the common TA broadcast in the system message (SIB) will have an uplink synchronization validity timer (UL synchronization validity timer).

In the related art, the UE in a connected state (such as an IOT device) only supports to obtain the SIB when a radio link failure (RLF) procedure is performed. If the uplink synchronization validity timer expires, it means that the ephemeris information and the common TA previously received from the SIB has become invalid, so that the UE 101 will no longer be able to obtain the position of the satellite 103, and cannot calculate the RTT from the UE 101 to the satellite 103, and thus TA pre-compensation cannot be performed, which will eventually lead to uplink out-of-synchronization (UL synchronization loss).

The uplink synchronization state of the UE can be maintained through a media access control (MAC) time alignment timer. When the time alignment timer is running, the UE considers that the uplink synchronization is achieved. When the time alignment timer expires, the UE considers that the uplink out-of-synchronization occurs, and in this case, the UE will release the SR/configured grant resources, and can only initiate a random access when there is uplink data to send.

After the UL synchronization loss, the UE needs to re-acquire the SIB. However, since the UE does not support the acquisition of the SIB in the connected state except for performing the RLF procedure, it is proposed to re-acquire the SIB by initiating the RLF procedure or a new procedure by the UE.

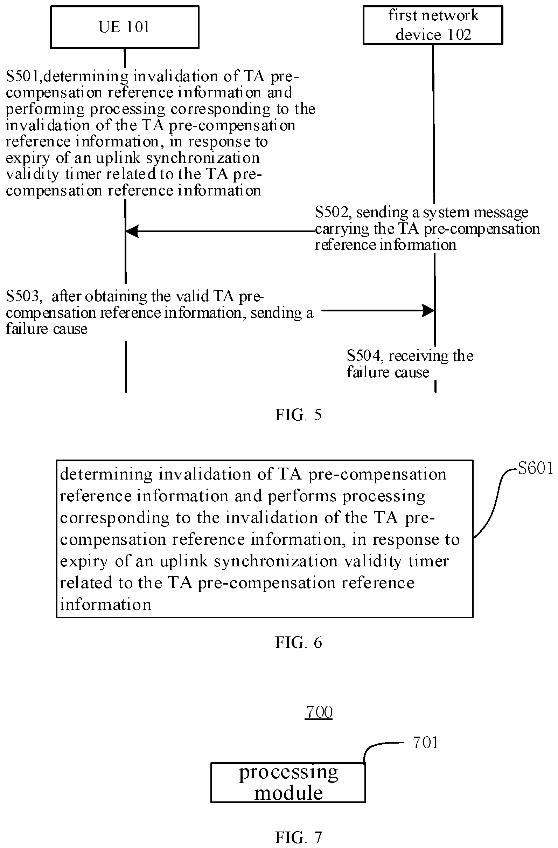

Embodiments of the invention provide an uplink synchronization method. Referring to FIG. 5, FIG. 5 is a flowchart of an uplink synchronization method according to an embodiment. As shown in FIG. 5, the method includes the following steps.

At S501, the UE 101 determines invalidation of TA pre-compensation reference information and performs processing corresponding to the invalidation of the TA pre-compensation reference information, in response to expiry of an uplink synchronization validity timer related to the TA pre-compensation reference information. The TA pre-compensation reference information includes at least one of ephemeris information or a common TA.

At S502, the first network device 102 sends a system message carrying the TA pre-compensation reference information to the UE 101. The TA pre-compensation reference information includes at least one of ephemeris information or a common TA.

At S503, after obtaining the valid TA pre-compensation reference information, the UE 101 sends a failure cause to the first network device 102. The failure cause includes at least one of: information indicating occurrence of the invalidation of the TA pre-compensation reference information, or information indicating occurrence of the expiry of the uplink synchronization validity timer.

At S504, the first network device 102 receives the failure cause.

In some implementations, the UE 101 performing processing corresponding to the invalidation of the TA pre-compensation reference information includes step S501-1 or step S501-2.

At S501-1, the UE 101 receives a system message sent by the first network device 102, but the UE 101 does not receive downlink data other than the system message.

At S501-2, in case that the UE 101 is an IOT device and in a connected state, the UE 101 receives a system message sent by the first network device 102, and monitors scheduling information corresponding to a system information-radio network temporary identity (SI-RNTI) or a paging-radio network temporary identity (P-RNTI) without monitoring scheduling information other than the scheduling information corresponding to the SI-RNTI or the P-RNTI on a physical downlink control channel (PDCCH).

In the embodiment of the invention, the UE 101 can adopt the corresponding processing method upon the invalidation of the TA pre-compensation reference information, so that the UE in the connected state may adopt an appropriate method to perform TA pre-compensation to ensure uplink synchronization. Further, after obtaining the valid TA pre-compensation reference information sent by the first network device 102, the UE 101 may further report the failure cause to the first network device 102 in time.

Embodiments of the invention provide an uplink synchronization method, which is executed by the UE 101. Referring to FIG. 6, FIG. 6 is a flowchart of an uplink synchronization method according to an embodiment. As shown in FIG. 6, the method includes the following steps.

At S601, the UE 101 determines invalidation of TA pre-compensation reference information and performs processing corresponding to the invalidation of the TA pre-compensation reference information, in response to expiry of an uplink synchronization validity timer related to the TA pre-compensation reference information. The TA pre-compensation reference information includes at least one of ephemeris information or a common TA.

In a possible implementation, the UE 101 is an IOT device in a connected state.

In a possible implementation, the processing corresponding to the invalidation of the TA pre-compensation reference information may include various operations.

In an example, the processing corresponding to the invalidation of the TA pre-compensation reference information includes: determining that there is a valid system message carrying the TA pre-compensation reference information.

In an example, the processing corresponding to the invalidation of the TA pre-compensation reference information includes: based on whether an RFL is declared, performing a corresponding operation in case that the UE cannot obtain a system message carrying the TA pre-compensation reference information.

In an example, the processing corresponding to the invalidation of the TA pre-compensation reference information includes: only receiving a system message.

In an example, the processing corresponding to the invalidation of the TA pre-compensation reference information includes: performing a corresponding operation based on first configuration information sent by the first network device 102. The first configuration information is configured to indicate whether to declare an RLF.

In an example, the processing corresponding to the invalidation of the TA pre-compensation reference information includes: performing a corresponding operation based on second configuration information sent by the first network device 102. The second configuration information is configured to indicate whether to maintain a connected state.

In an example, the processing corresponding to the invalidation of the TA pre-compensation reference information includes: entering an idle state from a connected state, and setting a connection release cause.

In an example, the processing corresponding to the invalidation of the TA pre-compensation reference information includes: recording a connection failure cause, and entering an idle state.

In a possible implementation, the UE 101 may start the UL synchronization validity timer according to a starting effective time (epoch time) corresponding to the ephemeris information and the common TA in the system message.

In the embodiment of the invention, the UE 101 can adopt the corresponding processing method upon the invalidation of the TA pre-compensation reference information, so that the UE in the connected state may adopt an appropriate method to perform TA pre-compensation to ensure uplink synchronization.

Embodiments of the invention provide an uplink synchronization method, which is executed by the UE 101. The method includes the following steps.

At S701, the UE 101 determines invalidation of TA pre-compensation reference information and performs processing corresponding to the invalidation of the TA pre-compensation reference information, in response to expiry of an uplink synchronization validity timer related to the TA pre-compensation reference information. The TA pre-compensation reference information includes at least one of ephemeris information or a common TA.

At S702, in case that the UE 101 is an IOT device and in a connected state, the UE 101 maintains the connected state in response to the uplink synchronization validity timer not being in a running state and determining that there is a valid system message carrying the TA pre-compensation reference information.

In some possible implementations, the IOT device includes: a bandwidth reduction and low complexity UE (BL UE), a UE in a coverage enhancement mode (UE in CE mode), a cellular-based Narrow Band Internet of Things UE (NB-IoT UE).

In some possible implementations, the system message includes a master information block (MIB) and multiple system information blocks (SIBs), in which the SIBs include SIB1-SIB12.

In the embodiment of the invention, the UE 101 can ensure that there is a valid system message carrying the TA pre-compensation reference information upon the invalidation of the TA pre-compensation reference information. When such system message is valid, the UE 101 in a connected state can utilize the valid TA pre-compensation reference information to perform TA pre-compensation, so as to ensure uplink synchronization.

Embodiments of the invention provide an uplink synchronization method, which is executed by the UE 101. The method includes the following steps.

At S701, the UE 101 determines invalidation of TA pre-compensation reference information and performs processing corresponding to the invalidation of the TA pre-compensation reference information, in response to expiry of an uplink synchronization validity timer related to the TA pre-compensation reference information. The TA pre-compensation reference information includes at least one of ephemeris information or a common TA.

At S710-10, the UE 101 determines that there is a valid MIB and a valid SIB1.

At S702, in case that the UE 101 is an IOT device and in a connected state, the UE 101 maintains the connected state in response to the uplink synchronization validity timer not being in a running state and determining that there is a valid system message carrying the TA pre-compensation reference information.

In some possible implementations, the UE 101 needs to ensure that there is the valid MIB and the valid SIB1 at the same time.

Embodiments of the invention provide an uplink synchronization method, which is executed by the UE 101. The method includes the following steps.

At S701, the UE 101 determines invalidation of TA pre-compensation reference information and performs processing corresponding to the invalidation of the TA pre-compensation reference information, in response to expiry of an uplink synchronization validity timer related to the TA pre-compensation reference information. The TA pre-compensation reference information includes at least one of ephemeris information or a common TA.

At S701-20, in case that the UE 101 is an IOT device and in a connected state, the UE 101 ensures that there is a valid system message carrying the TA pre-compensation reference information in response to a timer T311 being in a running state.

In some possible implementations, the timer T311 is used for the UE's RRC connection re-establishment procedure, and T311 controls the time required for a process that the UE starts the RRC connection re-establishment procedure and selects a cell, during which the UE performs a cell reselection procedure.

Embodiments of the invention provide an uplink synchronization method, which is executed by the UE 101. The method includes the following steps.

At S701, the UE 101 determines invalidation of TA pre-compensation reference information and performs processing corresponding to the invalidation of the TA pre-compensation reference information, in response to expiry of an uplink synchronization validity timer related to the TA pre-compensation reference information. The TA pre-compensation reference information includes at least one of ephemeris information or a common TA.

At S701-30, in case that the UE 101 is an IOT device and in a connected state, the UE 101 ensures that there is a valid system message carrying the TA pre-compensation reference information in response to a timer T311 being in a running state and the uplink synchronization validity timer not being in a running state.

Embodiments of the invention provide an uplink synchronization method, which is executed by the UE 101. The method includes the following steps.

At S801-1, the UE 101 determines invalidation of TA pre-compensation reference information, in response to expiry of an uplink synchronization validity timer related to the TA pre-compensation reference information.

At S801-2, in response to declaring an RFL, if the UE 101 cannot obtain a system message carrying the TA pre-compensation reference information, it is determined that a current cell is prohibited from being accessed.

The TA pre-compensation reference information includes at least one of ephemeris information or a common TA.

In some possible implementations, in case that the UE 101 is an IOT device and in a connected state, for example, the UE 101 is BL UE, UE in CE or NB-IOT UE, when the timer T311 is in a running state, if the UE 101 cannot obtain a system message carrying the TA pre-compensation reference information, the UE 101 determines that the current cell is prohibited from being accessed (bar). In addition, the UE 101 may determine to enable the current cell to be barred by setting intraFreqRelection to allowed and setting csg-Indication to FALSE.

The embodiment of the invention corresponding to the processing executed by the UE 101 when the RFL is declared in case that the UE 101 cannot obtain a system message carrying the TA pre-compensation reference information.

Embodiments of the invention provide an uplink synchronization method, which is executed by the UE 101. The method includes the following steps.

At S801-3, the UE 101 determines invalidation of TA pre-compensation reference information, in response to expiry of an uplink synchronization validity timer related to the TA pre-compensation reference information.

At S801-4, in response to not declaring an RFL, if the UE 101 cannot obtain a system message carrying the TA pre-compensation reference information, the UE 101 enters an idle state and records the RLF.

The TA pre-compensation reference information includes at least one of ephemeris information or a common TA.

In some possible implementations, recording the RLF includes at least one of:
recording a public land mobile network (PLMN) measurement result;
setting a connection failure type as the RLF; or
setting an RLF cause (rlf-Cause) as failure to obtain the system message or the invalidation of the TA pre-compensation reference information or the expiry of the uplink synchronization validity timer.

The embodiment of the invention corresponding to the processing executed by the UE 101 when the RFL is not declared in case that the UE 101 cannot obtain a system message carrying the TA pre-compensation reference information.

Embodiments of the invention provide an uplink synchronization method, which is executed by the UE 101. The method includes the following steps.

At S901-1, the UE 101 determines invalidation of TA pre-compensation reference information, in response to expiry of an uplink synchronization validity timer related to the TA pre-compensation reference information. The TA pre-compensation reference information includes at least one of ephemeris information or a common TA.

At S901-2, a system message is received, but downlink data other than the system message is not received.

In some possible implementations, in case that the UE 101 is an IOT device and in a connected state, for example, the UE 101 is BL UE, UE in CE or NB-IOT UE, when the uplink synchronization validity timer is not running or the UE 101 is receiving a system message currently, the UE 101 only needs to receive the required system message, but does not receive other downlink transmission data.

In some possible implementations, in case that the UE 101 is an IOT device and in a connected state, for example, the UE 101 is BL UE, UE in CE or NB-IOT UE, when the uplink synchronization validity timer is not running or the UE 101 is receiving a system message currently, the UE 101 only needs to receive the required system message and a paging message, but does not receive other downlink transmission data.

Embodiments of the invention provide an uplink synchronization method, which is executed by the UE 101.

At S901-3, the UE 101 determines invalidation of TA pre-compensation reference information, in response to expiry of an uplink synchronization validity timer related to the TA pre-compensation reference information. The TA pre-compensation reference information includes at least one of ephemeris information or a common TA.

At S901-4, in case that the UE 101 is an IOT device and in a connected state, the UE 101 receives a system message and monitors scheduling information corresponding to an SI-RNTI or a P-RNTI without monitoring scheduling information other than the scheduling information corresponding to the SI-RNTI or the P-RNTI on a physical downlink control channel (PDCCH).

In some possible implementations, in case that the UE 101 is an IOT device and in a connected state, for example, the UE 101 is BL UE, UE in CE or NB-IOT UE, when the uplink synchronization validity timer is not running or the UE 101 is receiving a system message currently, the UE 101 only monitors the scheduling information corresponding to the SI-RNTI and/or P-RNTI without monitoring other scheduling information on the PDCCH.

For example, at least one of the followings is not monitored: uplink or downlink scheduling for a cell-radio network temporary identity (C-RNTI), C-RNTI of semi-persistent scheduling, PUR-RNTI, or temporary C-RNTI on the PDCCH.

The embodiment of the invention corresponding to the case where only the related system message is received upon the invalidation of the TA pre-compensation reference information.

Embodiments of the invention provide an uplink synchronization method, which is executed by the UE 101. The method includes the following steps.

At S1001, the UE 101 determines invalidation of TA pre-compensation reference information and performs processing corresponding to the invalidation of the TA pre-compensation reference information, in response to expiry of an uplink synchronization validity timer related to the TA pre-compensation reference information. The TA pre-compensation reference information includes at least one of ephemeris information or a common TA.

At S1002, after obtaining the valid TA pre-compensation reference information, the UE 101 sends a failure cause to the first network device 102. The failure cause includes at least one of: information indicating occurrence of the invalidation of the TA pre-compensation reference information, or information indicating occurrence of the expiry of the uplink synchronization validity timer.

In embodiments of the invention, after obtaining the TA pre-compensation reference information again, the UE 101 may report the first network device 102 in time, so that the first network device 102 may perform the corresponding processing operations.

Embodiments of the invention provide an uplink synchronization method, which is executed by the UE 101. The method includes the following steps.

At S1001, the UE 101 determines invalidation of TA pre-compensation reference information and performs processing corresponding to the invalidation of the TA pre-compensation reference information, in response to expiry of an uplink synchronization validity timer related to the TA pre-compensation reference information. The TA pre-compensation reference information includes at least one of ephemeris information or a common TA.

At S1002-1, after obtaining the valid TA pre-compensation reference information, the UE 101 sends a MAC CE or a dedicated RRC message to the first network device 102. The MAC CE or the dedicated RRC message includes the failure cause.

In some possible implementations, the failure cause may be invalidation of the ephemeris information in the TA pre-compensation reference information.

In some possible implementations, the failure cause may be invalidation of the common TA in the TA pre-compensation reference information.

In some possible implementations, the failure cause may be expiry of the uplink synchronization validity timer.

Embodiments of the invention provide an uplink synchronization method, which is executed by the UE 101. The method includes the following steps.

At S1001, the UE 101 determines invalidation of TA pre-compensation reference information and performs processing corresponding to the invalidation of the TA pre-compensation reference information, in response to expiry of an uplink synchronization validity timer related to the TA pre-compensation reference information. The TA pre-compensation reference information includes at least one of ephemeris information or a common TA.

At S1002-2, the UE 101 sends auxiliary information to the first network device 102. The auxiliary information includes the failure cause.

In some possible implementations, the failure cause may be: invalidation of the ephemeris information in the TA pre-compensation reference information, invalidation of the common TA in the TA pre-compensation reference information or expiry of the uplink synchronization validity timer.

Embodiments of the invention provide an uplink synchronization method, which is executed by the UE 101. The method includes the following steps.

At S 1 00 1, the UE 101 determines invalidation of TA pre-compensation reference information and performs processing corresponding to the invalidation of the TA pre-compensation reference information, in response to expiry of an uplink synchronization validity timer related to the TA pre-compensation reference information. The TA pre-compensation reference information includes at least one of ephemeris information or a common TA.

At S1002, after obtaining the valid TA pre-compensation reference information, the UE 101 sends a failure cause to the first network device 102. The failure cause includes at least one of: information indicating occurrence of the invalidation of the TA pre-compensation reference information, or information indicating occurrence of the expiry of the uplink synchronization validity timer.

At S1003, information indicating a time when a failure occurs is sent to the first network device 102.

In some possible implementations, the information indicating the time when a failure occurs may be, for example, a time interval between a time moment of when a failure occurs and a current reporting time moment.

In an example, the time interval may be expressed by seconds, milliseconds, the number of subframes or the number of slots.

Embodiments of the invention provide an uplink synchronization method, which is executed by the UE 101. The method includes the following steps.

At S1101-1, the UE 101 determines invalidation of TA pre-compensation reference information, in response to expiry of an uplink synchronization validity timer related to the TA pre-compensation reference information.

At S1101-2, the UE 101 receives first configuration information from the first network device 102. The first configuration information is configured to indicate whether to declare an RLF.

At S1101-3, it is determined whether to declare the RLF based on the first configuration information.

The TA pre-compensation reference information includes at least one of ephemeris information or a common TA.

In some possible implementations, if the first configuration information sent by the first network device 102 indicates allowing to declare the RLF, the UE 101 performs declaration of the RLF based on the first configuration information after the uplink synchronization validity timer expires, otherwise, the UE 101 does not declare the RLF.

Embodiments of the invention provide an uplink synchronization method, which is executed by the UE 101. The method includes the following steps.

At S1101-1, the UE 101 determines invalidation of TA pre-compensation reference information, in response to expiry of an uplink synchronization validity timer related to the TA pre-compensation reference information.

At S1101-4, the UE 101 receives second configuration information from the first network device 102. The second configuration information is configured to indicate whether to maintain a connected state.

At S1101-5, it is determined whether to maintain the connected state based on the second configuration information.

The TA pre-compensation reference information includes at least one of ephemeris information or a common TA.

Alternatively, the method includes step S1101, step 1102, step 1103, step 1104 and step 1105.

In some possible implementations, if the second configuration information sent by the first network device 102 indicates allowing to maintain the connected state, the UE 101 maintains the connected state based on the second configuration information after the uplink synchronization validity timer expires, otherwise, the UE 101 does not maintain the connected state, for example enters the idle state.

Embodiments of the invention provide an uplink synchronization method, which is executed by the UE 101. The method includes the following steps.

At S1201-1, the UE 101 determines invalidation of TA pre-compensation reference information, in response to expiry of an uplink synchronization validity timer related to the TA pre-compensation reference information.

At S1201-2, the UE 101 enters an idle state from a connected state, and sets a connection release cause as the invalidation of the TA pre-compensation reference information or the expiry of the uplink synchronization validity timer.

The TA pre-compensation reference information includes at least one of ephemeris information or a common TA.

In some possible implementations, the invalidation of the TA pre-compensation reference information may be: invalidation of the ephemeris information, and/or invalidation of the common TA.

Embodiments of the invention provide an uplink synchronization method, which is executed by the UE 101. The method includes the following steps.

At S1201, the UE 101 determines invalidation of TA pre-compensation reference information and performs processing corresponding to the invalidation of the TA pre-compensation reference information, in response to expiry of an uplink synchronization validity timer related to the TA pre-compensation reference information. The TA pre-compensation reference information includes at least one of ephemeris information or a common TA.

At S1202, the UE 101 determines whether to enter an idle state from a connected state.

In some possible implementations, the UE 101 determines whether to return to the idle state based on configuration of the first network device 102.

Embodiments of the invention provide an uplink synchronization method, which is executed by the UE 101. The method includes the following steps.

At S1201, the UE 101 determines invalidation of TA pre-compensation reference information and performs processing corresponding to the invalidation of the TA pre-compensation reference information, in response to expiry of an uplink synchronization validity timer related to the TA pre-compensation reference information. The TA pre-compensation reference information includes at least one of ephemeris information or a common TA.

At S1202-1, the UE 101 enters an idle state from a connected state in response to the first network device 102 configuring third configuration information. The third configuration information is configured to instruct the UE 101 to enter the idle state upon the expiry of the uplink synchronization validity timer.

In some possible implementations, after the time alignment timer expires, if the third configuration information configured by the first network device 102 instructs to return to the idle state upon the expiry of the uplink synchronization validity timer, the UE 101 returns to the idle state.

Embodiments of the invention provide an uplink synchronization method, which is executed by the UE 101. The method includes the following steps.

At S1201, the UE 101 determines invalidation of TA pre-compensation reference information and performs processing corresponding to the invalidation of the TA pre-compensation reference information, in response to expiry of an uplink synchronization validity timer related to the TA pre-compensation reference information. The TA pre-compensation reference information includes at least one of ephemeris information or a common TA.

At S1202-2, the UE 101 declares an RLF or determines expiry of a time alignment timer (TAT) in response to the first network device 102 not configuring third configuration information. The third configuration information is configured to instruct the UE 101 to enter the idle state upon the expiry of the uplink synchronization validity timer.

In some possible implementations, after the time alignment timer expires, if the third configuration information instructing to return to the idle state is not configured by the first network device 102, the UE 101 declares the RLF or determines the expiry of the TAT.

Embodiments of the invention provide an uplink synchronization method, which is executed by the UE 101. The method includes the following steps.

At S1201-3, the UE 101 determines invalidation of TA pre-compensation reference information, in response to expiry of an uplink synchronization validity timer related to the TA pre-compensation reference information.

At S1201-4, a connection failure cause is recorded, and an idle state is entered.

The TA pre-compensation reference information includes at least one of ephemeris information or a common TA.

At S1202, the UE 101 determines whether to enter an idle state from a connected state.

In some possible implementations, the UE 101 records the connection failure cause to VarRLF-Report before entering the idle state.

In some possible implementations, the UE 101 may further record other connection failure information before entering the idle state, for example recording the PLMN measurement result, setting the connection failure type.

In an example, the connection failure type is set as the expiry of the uplink synchronization validity timer, invalidation of the ephemeris information and/or the common TA in the TA pre-compensation reference information.

In an example, when the connection failure type is set as the RLF, the connection failure cause includes at least one of:
the expiry of the uplink synchronization validity timer;
invalidation of the ephemeris information and/or the common TA in the TA pre-compensation reference information;
the expiry of timer T310; or
a random access issue.

Embodiments of the invention provide an uplink synchronization method, which is executed by the first network device 102. The method includes the following steps.

At S1301, the first network device 102 sends a system message carrying TA pre-compensation reference information to the UE 101, in response to expiry of an uplink synchronization validity timer related to the TA pre-compensation reference information.

The TA pre-compensation reference information includes at least one of ephemeris information or a common TA. The UE 101 performs processing corresponding to the invalidation of the TA pre-compensation reference information in response to expiry of an uplink synchronization validity timer related to the TA pre-compensation reference information and determining invalidation of the TA pre-compensation reference information.

In some possible implementations, the UE 101 performing some operations in the processing corresponding to the invalidation of the TA pre-compensation reference information includes at least one of the following steps:
the UE 101 receiving a system message sent by the first network device 102 but not receiving downlink data other than the system message; or
in case that the UE 101 is an IOT device and in a connected state, the UE 101 receiving a system message sent by the first network device 102 and monitors scheduling information corresponding to an SI-RNTI or a P-RNTI without monitoring scheduling information other than the scheduling information corresponding to the SI-RNTI or the P-RNTI on a physical downlink control channel (PDCCH).

Embodiments of the invention provide an uplink synchronization method, which is executed by the first network device 102. The method includes the following steps.

At S1301, the first network device 102 sends a system message carrying TA pre-compensation reference information to the UE 101, in response to expiry of an uplink synchronization validity timer related to the TA pre-compensation reference information.

The TA pre-compensation reference information includes at least one of ephemeris information or a common TA. The UE 101 performs processing corresponding to the invalidation of the TA pre-compensation reference information in response to expiry of an uplink synchronization validity timer related to the TA pre-compensation reference information and determining invalidation of the TA pre-compensation reference information.

At S1302, at least one of the following configuration information is sent to the UE 101: first configuration information, second configuration information, or third configuration information.

The first configuration information is configured to indicate whether the UE 101 declares an RLF. The second configuration information is configured to indicate whether the UE 101 maintains a connected state. The third configuration information is configured to instruct the UE 101 to enter the idle state upon the expiry of the uplink synchronization validity timer.

Embodiments of the invention provide an uplink synchronization method, which is executed by the first network device 102. The method includes the following steps.

At S1301, the first network device 102 sends a system message carrying TA pre-compensation reference information to the UE 101, in response to expiry of an uplink synchronization validity timer related to the TA pre-compensation reference information.

The TA pre-compensation reference information includes at least one of ephemeris information or a common TA. The UE 101 performs processing corresponding to the invalidation of the TA pre-compensation reference information in response to expiry of an uplink synchronization validity timer related to the TA pre-compensation reference information and determining invalidation of the TA pre-compensation reference information.

At S1303, a failure cause sent by the UE 101 is received. The failure cause includes at least one of: information indicating occurrence of the invalidation of the TA pre-compensation reference information, or information indicating occurrence of the expiry of the uplink synchronization validity timer. After obtaining the valid TA pre-compensation reference information, the UE 101 sends the failure cause to the first network device 102.

Based on a same concept as the above method embodiments, embodiments of the invention further provide a communication apparatus. The communication apparatus may have the functions of the UE 101 in the above method embodiments, and is configured to perform the steps executed by the UE 101 according to the above embodiments. The functions may be realized by hardware, or by software or hardware performing corresponding software. The hardware or software includes one or more modules corresponding to the above functions.

In a possible implementation, a communication apparatus 700 illustrated in FIG. 7 may be configured as the UE 101 involved in the above method embodiments, and perform the steps executed by the UE 101 in the above method embodiments. As illustrated in FIG. 7, the communication apparatus 700 includes: a processing module 701. The processing module 701 is used for the communication apparatus to perform processing operations, for example, generating information/messages to be sent, or processing received signals to obtain the information/messages.

When the steps executed by the UE 101 are performed, the processing module 701 is configured to determine invalidation of TA pre-compensation reference information and perform processing corresponding to the invalidation of the TA pre-compensation reference information, in response to expiry of an uplink synchronization validity timer related to the TA pre-compensation reference information. The TA pre-compensation reference information includes at least one of ephemeris information or a common TA.

In a possible implementation, the processing module 701 is further configured to: in case that the UE is an Internet of Things (IOT) device and is in a connected state, maintain the connected state in response to the uplink synchronization validity timer not being in a running state and determining that there is a valid system message carrying the TA pre-compensation reference information.

In a possible implementation, the processing module 701 is further configured to: determine that there is a valid master information block (MIB) and a valid system information block 1 (SIB1).

In a possible implementation, the processing module 701 is further configured to: in case that the UE is an IOT device and is in a connected state, ensure that there is a valid system message carrying the TA pre-compensation reference information in response to a timer T311 being in a running state.

In a possible implementation, the processing module 701 is further configured to: in case that the UE is an IOT device and is in a connected state, ensure that there is a valid system message carrying the TA pre-compensation reference information in response to a timer T311 being in a running state and the uplink synchronization validity timer not being in a running state.

In a possible implementation, the processing module 701 is further configured to: determine that a current cell is prohibited from being accessed in case that the UE is unable to obtain a system message carrying the TA pre-compensation reference information, in response to declaring a radio link failure (RFL).

In a possible implementation, the processing module 701 is further configured to: enter an idle state and record an RLF in case that the UE is unable to obtain a system message carrying the TA pre-compensation reference information, in response to not declaring the RFL.

In a possible implementation, recording the RLF includes at least one of:
recording a public land mobile network (PLMN) measurement result;
setting a connection failure type as the RLF; or
setting an RLF cause as failure to obtain the system message or the invalidation of the TA pre-compensation reference information or the expiry of the uplink synchronization validity timer.

In a possible implementation, the processing module 701 is further configured to: receive a system message and not receive downlink data other than the system message.

In a possible implementation, the processing module 701 is further configured to: in case that the UE is an IOT device and is in a connected state, receive a system message and monitor scheduling information corresponding to a system information-radio network temporary identity (SI-RNTI) or a paging-radio network temporary identity (P-RNTI) without monitoring scheduling information other than the scheduling information corresponding to the SI-RNTI or the P-RNTI on a physical downlink control channel (PDCCH).

In a possible implementation, the communication apparatus further includes a transceiver module 702.

The transceiver module 702 is configured to send a failure cause to a network device after obtaining valid TA pre-compensation reference information, in which the failure cause includes at least one of: information indicating occurrence of the invalidation of the TA pre-compensation reference information, or information indicating occurrence of the expiry of the uplink synchronization validity timer.

In a possible implementation, the transceiver module 702 is configured to send a media access control control element (MAC CE) or a dedicated radio resource control (RRC) message to the network device, in which the MAC CE or the dedicated RRC message includes the failure cause.

In a possible implementation, the transceiver module 702 is configured to send auxiliary information to the network device, in which the auxiliary information includes the failure cause.

In a possible implementation, the transceiver module 702 is configured to send information indicating a time when a failure occurs to the network device.

In a possible implementation, the transceiver module 702 is configured to receive first configuration information from a network device, in which the first configuration information is configured to indicate whether to declare an RLF.

The processing module 701 is configured to determine whether to declare the RLF based on the first configuration information.

In a possible implementation, the transceiver module 702 is configured to receive second configuration information from a network device, in which the second configuration information is configured to indicate whether to maintain a connected state.

The processing module 701 is configured to determine whether to maintain the connected state based on the first configuration information.

In a possible implementation, the processing module 701 is configured to enter an idle state from a connected state, and set a connection release cause as the invalidation of the TA pre-compensation reference information or the expiry of the uplink synchronization validity timer.

In a possible implementation, the processing module 701 is configured to determine whether to enter an idle state from a connected state.

In a possible implementation, the processing module 701 is configured to enter the idle state from the connected state in response to a network device configuring third configuration information, in which the third configuration information is configured to instruct the UE to enter the idle state upon the expiry of the uplink synchronization validity timer.

In a possible implementation, determining whether to enter the idle state from the connected state includes:
declaring an RLF or determining expiry of a time alignment timer (TAT) in response to a network device not configuring third configuration information, in which the third configuration information is configured to instruct the UE to enter the idle state upon the expiry of the uplink synchronization validity timer.

In a possible implementation, the processing module 701 is configured to record a connection failure cause, and enter an idle state.

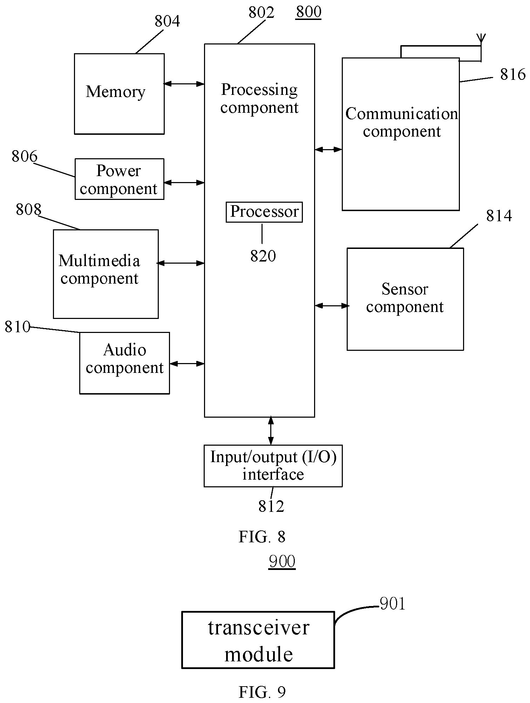

When the communication apparatus is the UE 101, a structure of the communication apparatus may also be as illustrated in FIG. 8. The apparatus 800 may be a mobile phone, a computer, a digital broadcast terminal, a messaging device, a game console, a tablet device, a medical device, a fitness device, a personal digital assistant, and the like.

Referring to FIG. 8, the apparatus 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the apparatus 800, such as the operations associated with display, telephone calls, data communications, camera operations, and recording operations. The processing component 802 may include one or more processors 820 to perform instructions to perform all or part of the steps in the above described methods. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the apparatus 800. Examples of such data include instructions for any applications or methods operated on the apparatus 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the apparatus 800. The power component 806 may include a power management system, one or more power sources, and any other components associated with the generation, management, and distribution of power in the apparatus 800.

The multimedia component 808 includes a screen providing an output interface between the apparatus 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the apparatus 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the apparatus 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but be not limited to, a home button, a volume button, a starting button, and a locking button.

The sensor component 814 includes one or more sensors to provide status assessments of various aspects of the apparatus 800. For example, the sensor component 814 may detect an open/closed status of the apparatus 800, relative positioning of components, e.g., the display and the keypad, of the apparatus 800, a change in position of the apparatus 800 or a component of the apparatus 800, a presence or absence of user contact with the apparatus 800, an orientation or an acceleration/deceleration of the apparatus 800, and a change in temperature of the apparatus 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the apparatus 800 and other devices. The apparatus 800 may access a wireless network based on a communication standard, such as Wi-Fi, 4G, or 5G, or a combination thereof. In an exemplary embodiment, the communication component 816 receives a broadcast signal or broadcast associated information from an external broadcast management system via a broadcast channel. In an exemplary embodiment, the communication component 816 also includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the apparatus 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

Based on a same concept as the above method embodiments, embodiments of the invention further provide a communication device. The communication apparatus may have the functions of the first network device 102 in the above method embodiments, and is configured to perform the steps executed by the first network device 102 according to the above embodiments. The functions may be realized by hardware, or by software or hardware performing corresponding software. The hardware or software includes one or more modules corresponding to the above functions.

In a possible implementation, the communication apparatus 900 illustrated in FIG. 9 may be configured as the first network device 102 involved in the above method embodiments, and perform the steps performed by the first network device 102 in the above method embodiments. As illustrated in FIG. 9, the communication apparatus 900 illustrated in FIG. 9 may include a transceiver module 901. The transceiver module 901 can be used to support the communication apparatus 900 to perform communications, and the transceiver module 901 can have a wireless communication function, for example, it can perform wireless communication with other communication devices through a wireless air interface.

When the steps executed by the first network device 102 are performed, the transceiver module 901 is configured to send a system message carrying TA pre-compensation reference information to the UE 101, in response to expiry of an uplink synchronization validity timer related to the TA pre-compensation reference information. The TA pre-compensation reference information includes at least one of ephemeris information or a common TA. The UE 101 performs processing corresponding to the invalidation of the TA pre-compensation reference information in response to expiry of an uplink synchronization validity timer related to the TA pre-compensation reference information and determining invalidation of the TA pre-compensation reference information.

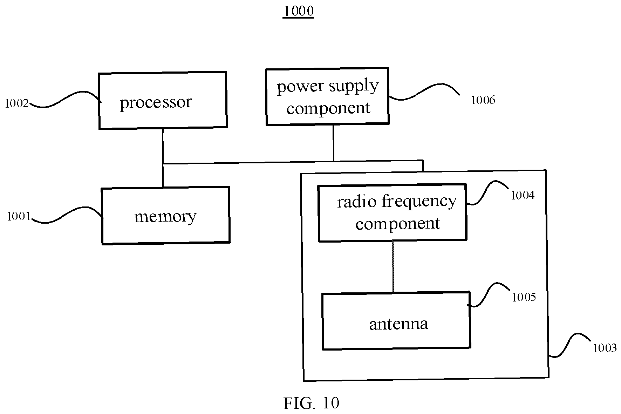

When the communication apparatus is the first network device 102, a structure of the communication apparatus may also be illustrated in FIG. 10. As illustrated in FIG. 10, the apparatus 1000 includes a memory 1001, a processor 1002, a transceiver component 1003 and a power supply component 1006. The memory 1001 is coupled to the processor 1002, and may be configured to store a program and data necessary for the communication device 1000 to realize various functions. The processor 1002 is configured to support the communication device 1000 to perform the corresponding function in the above method. Such function may be realized by calling the program stored in the memory 1001. The transceiver component 1003 may be a wireless transceiver, and may be configured to support the communication apparatus 1000 to receive signaling and/or data and send the signaling and/or data through a wireless air interface. The transceiver module 1003 can also be called a transceiver unit or a communication unit. The transceiver module 1003 can include a radio frequency component 1004 and one or more antennas 1005. The radio frequency component 1004 may be a remote radio unit (RRU), and may be configured to transmission of a radio frequency signal and a conversion between the radio frequency signal and a baseband signal. The one or more antennas 1005 may be configured to radiation and reception of the radio frequency signal.

When the communication apparatus 1000 needs to send data, the processor 1002 may perform baseband processing on the data to be sent, and then output a baseband signal to a radio frequency unit, and the radio frequency unit performs radio frequency processing on the baseband signal and then sends the radio frequency signal in the form of electromagnetic waves through the antenna. When the data is sent to the communication apparatus 1000, the radio frequency unit receives the radio frequency signal through the antenna, converts the radio frequency signal into a baseband signal, and outputs the baseband signal to the processor 1002. The processor 1002 converts the baseband signal into data and processes the data.

Other implementation of embodiments of the invention will be apparent to those skilled in the art from consideration of the specification and practice of the invention disclosed here. This application is intended to cover any variations, uses, or adaptations of embodiments of the invention following the general principles thereof and including such departures from the invention as come within known or customary practice in the art. The specification and examples be considered as exemplary only, with a true scope and spirit of embodiments of the invention being indicated by the following claims.

It should be understood that embodiments of the invention are not limited to the exaction construction that has been described above and illustrated in the accompanying drawings, and that various modifications and changes may be made without departing from the scope thereof. It is intended that the scope of embodiments of the invention only be limited by the appended claims.

### Industrial practicability

The UE determines invalidation of timing advance (TA) pre-compensation reference information based on expiry of an uplink synchronization validity timer related to the TA pre-compensation reference information, and may adopt a corresponding processing method in this case, so that the UE in a connected state can adopt an appropriate method to perform TA pre-compensation to ensure uplink synchronization.

## Claims

1. An uplink synchronization method, performed by a user equipment (UE), comprising:
determining invalidation of timing advance (TA) pre-compensation reference information and performing processing corresponding to the invalidation of the TA pre-compensation reference information, in response to expiry of an uplink synchronization validity timer related to the TA pre-compensation reference information;
wherein the TA pre-compensation reference information comprises at least one of ephemeris information or a common TA.

2. The method of claim 1, further comprising:
in case that the UE is an Internet of Things (IOT) device and is in a connected state, maintaining the connected state in response to the uplink synchronization validity timer not being in a running state and determining that there is a valid system message carrying the TA pre-compensation reference information.

3. The method of claim 2, further comprising:
determining that there is a valid master information block (MIB) and a valid system information block 1 (SIB1).

4. The method of claim 1, further comprising:
in case that the UE is an IOT device and is in a connected state, ensuring that there is a valid system message carrying the TA pre-compensation reference information in response to a timer T311 being in a running state.

5. The method of claim 1, further comprising: in case that the UE is an IOT device and is in a connected state, ensuring that there is a valid system message carrying the TA pre-compensation reference information in response to a timer T311 being in a running state and the uplink synchronization validity timer not being in a running state.

6. The method of claim 1, wherein performing the processing corresponding to the invalidation of the TA pre-compensation reference information comprises:
determining that a current cell is prohibited from being accessed in case that the UE is unable to obtain a system message carrying the TA pre-compensation reference information, in response to declaring a radio link failure (RFL).

7. The method of claim 1, wherein performing the processing corresponding to the invalidation of the TA pre-compensation reference information comprises:
entering an idle state and recording an RLF in case that the UE is unable to obtain a system message carrying the TA pre-compensation reference information, in response to not declaring the RFL.

8. The method of claim 7, wherein recording the RLF comprises at least one of:
recording a public land mobile network (PLMN) measurement result;
setting a connection failure type as the RLF; or
setting an RLF cause as failure to obtain the system message or the invalidation of the TA pre-compensation reference information or the expiry of the uplink synchronization validity timer.

9. The method of claim 1, wherein performing the processing corresponding to the invalidation of the TA pre-compensation reference information comprises:
receiving a system message and not receiving downlink data other than the system message.

10. The method of claim 1, wherein performing the processing corresponding to the invalidation of the TA pre-compensation reference information comprises:
in case that the UE is an IOT device and is in a connected state, receiving a system message and monitoring scheduling information corresponding to a system information-radio network temporary identity (SI-RNTI) or a paging-radio network temporary identity (P-RNTI) without monitoring scheduling information other than the scheduling information corresponding to the SI-RNTI or the P-RNTI on a physical downlink control channel (PDCCH).

11. The method of claim 1, further comprising:
sending a failure cause to a network device after obtaining valid TA pre-compensation reference information, wherein the failure cause comprises at least one of: information indicating occurrence of the invalidation of the TA pre-compensation reference information, or information indicating occurrence of the expiry of the uplink synchronization validity timer.

12. The method of claim 11, wherein sending the failure cause to the network device comprises:
sending a media access control control element (MAC CE) or a dedicated radio resource control (RRC) message to the network device, wherein the MAC CE or the dedicated RRC message comprises the failure cause.

13. The method of claim 11, wherein sending the failure cause to the network device comprises:
sending auxiliary information to the network device, wherein the auxiliary information comprises the failure cause.

14. The method of claim 11, further comprising:
sending information indicating a time when a failure occurs to the network device.

15. The method of claim 1, wherein performing the processing corresponding to the invalidation of the TA pre-compensation reference information comprises:
receiving first configuration information from a network device, wherein the first configuration information is configured to indicate whether to declare an RLF; and
determining whether to declare the RLF based on the first configuration information.

16. The method of claim 1 or 15, wherein performing the processing corresponding to the invalidation of the TA pre-compensation reference information comprises:
receiving second configuration information from a network device, wherein the second configuration information is configured to indicate whether to maintain a connected state; and
determining whether to maintain the connected state based on the second configuration information.

17. The method of claim 1, wherein performing the processing corresponding to the invalidation of the TA pre-compensation reference information comprises:
entering an idle state from a connected state, and setting a connection release cause as the invalidation of the TA pre-compensation reference information or the expiry of the uplink synchronization validity timer.

18. The method of claim 1, further comprising:
determining whether to enter an idle state from a connected state.

19. The method of claim 18, wherein determining whether to enter the idle state from the connected state comprises:
entering the idle state from the connected state in response to a network device configuring third configuration information, wherein the third configuration information is configured to instruct the UE to enter the idle state upon the expiry of the uplink synchronization validity timer.

20. The method of claim 18, wherein determining whether to enter the idle state from the connected state comprises:
declaring an RLF or determining expiry of a time alignment timer (TAT) in response to a network device not configuring third configuration information, wherein the third configuration information is configured to instruct the UE to enter the idle state upon the expiry of the uplink synchronization validity timer.

21. The method of claim 18, wherein performing the processing corresponding to the invalidation of the TA pre-compensation reference information comprises:
recording a connection failure cause, and entering an idle state.

22. A communication apparatus, comprising:
a processing module, configured to determine invalidation of timing advance (TA) pre-compensation reference information and perform processing corresponding to the invalidation of the TA pre-compensation reference information, in response to expiry of an uplink synchronization validity timer related to the TA pre-compensation reference information;
wherein the TA pre-compensation reference information comprises at least one of ephemeris information or a common TA.

23. A communication apparatus comprising: a processor, and a memory;
wherein the memory is configured to store computer programs, and the processor is configured to execute the computer programs to perform the method of any one of claims 1-21.

24. A computer-readable storage medium having instructions stored thereon, wherein when the instructions are called and executed on a computer, the computer is caused to perform the method of any one of claims 1-21.
